# FASCICULE DE BREVET EUROPEEN

(11) **EP 0 754 322 B1**
(45) Date de publication et mention de la délivrance du brevet: **04.08.1999**
(21) Numéro de dépôt: 95916701.6
(22) Date de dépôt: 04.04.1995
(51) Int. Cl.: G06F 13/38, H01R 13/66

(54) **DISPOSITIF DE LIAISON INFORMATIQUE ENTRE APPAREILS AVEC SYSTEMES DE COMMUNICATION HETEROGENES, CLEF RELATIVE A UN TEL DISPOSITIF**
VORRICHTUNG ZUR VERBINDUNG VON RECHNEREINHEITEN UNTER VERWENDUNG VON HETEROGENEN KOMMUNIKATIONSSYSTEMEN UND SCHLÜSSEL DAFÜR
DEVICE FOR INTERCONNECTING COMPUTER EQUIPMENT USING HETEROGENEOUS COMMUNICATION SYSTEMS, AND KEY THEREFOR

(30) Priorité: 08.04.1994 FR 9404150
(43) Date de publication de la demande: 22.01.1997
(73) Titulaire: Lebeau, Luc, 7000 Mons (BE)
(72) Inventeur: Lebeau, Luc, 7000 Mons (BE)
(74) Mandataire: Michardière, Bernard
(86) Numéro de dépôt international: FR9500424
(87) Numéro de publication internationale: WO9527943

(56) Documents cités:
- EP-A- 0 259 786
- DE-A- 4 229 566
- GB-A- 2 241 854

## Description

L'invention se rapporte à un dispositif permettant le transfert de données informatiques entre d'une part des appareils hétérogènes et d'autre part un ou plusieurs ordinateurs.

On connaît, d'après GB-A-2 241 854, un dispositif de liaison informatique ayant plusieurs canaux de communication qui permettent la communication entre des appareils connectés au dispositif en utilisant des protocoles de communication différents, un processeur canal étant associé à chaque canal, les processeurs canaux pouvant être programmés avec des programmes de protocoles différents pour permettre le transfert bidirectionnel des informations entre lesdits appareils selon un protocole correspondant, les processeurs canaux étant reliés à un processeur central disposant de programmes de communication.

Chaque réseau de communication est relié à plusieurs dispositifs d'entrée-sortie. Un même câble est ainsi relié à plusieurs appareils et transmet en série des messages provenant de ces divers appareils. Ce dispositif se présente en réalité comme un multiplexeur intelligent qui dirige des messages ou des parties de messages en fonction d'informations de routage contenues dans ces messages. En d'autres termes, il s'agit donc d'un aiguillage intelligent ayant la particularité supplémentaire de découper certaines parties pertinentes du message en fonction des informations de routage qu'il contient.

En outre ce dispositif reçoit des cassettes extractibles contenant le logiciel contrôlant la communication. Cela signifie qu'un changement de protocole peut nécessiter une intervention manuelle pour changer une ou plusieurs cassettes adaptées au nouveau protocole.

DE-A-42 29 566 décrit un dispositif d'alimentation capable de reconnaître automatiquement un appareil connecté suite à la lecture d'informations mémorisées dans la fiche d'un câble relié à cet appareil. Aucune indication n'est fournie sur les moyens susceptibles d'être commandés suite à l'identification.

Par ailleurs il existe déjà de nombreux dispositifs de liaison informatique ou interfaces entre machines de différents types. Ceux-ci sont souvent spécifiques à un matériel donné. Il est généralement fastidieux sinon impossible d'adapter ces interfaces à d'autres matériels avec des protocoles variés et/ou des liaisons physiques différentes. Dans le domaine médical, par exemple, il est pratiquement impossible dans la plupart des cas de relier un moniteur d'une marque à un moniteur d'une autre marque. Si l'on veut connecter un ordinateur de centralisation de données, par exemple une centrale d'alarme, à plusieurs appareils de marques différentes, l'utilisateur est obligé de développer des logiciels et du matériel spécifique et il se retrouve alors confronté au problème de relier tous ces modules spécifiques à un seul ordinateur. Bien que ce problème soit encore solvable avec deux ou trois appareils à connecter, il devient un véritable casse-tête avec l'augmentation et la diversité des appareils à connecter et la réalisation éventuelle aboutit en tout état de cause sur des systèmes inexploitables dans la pratique.

La présente invention a pour objet de remédier à ces inconvénients en configurant automatiquement une interface par le chargement et l'exécution de programmes spécifiques de conversion de protocoles et par l'adaptation de la liaison physique, sur base d'une reconnaissance du câble de liaison entre l'interface d'une part et le ou les ordinateurs et appareils à connecter d'autre part.

Le dispositif selon l'invention est caractérisé en ce qu'une clef est attachée ou contenue dans le câble de liaison reliant d'une part une interface et d'autre part un ou des appareils ou ordinateurs ; cette clef se présentant sous la forme d'un composant ou d'un ensemble de composants électriques ou électroniques ; l'interface ayant les moyens de lire cette clef et donc d'identifier le câble qui lui est connecté ; l'interface étant munie de prises permettant de connecter chacun de ces câbles à un processeur "canal" ; ces processeurs canaux étant capables de se configurer au niveau logiciel suite à la lecture de ces clefs propres à chaque câble de liaison ; ces processeurs canaux étant reliés au sein de l'interface à un processeur "central" ; ce processeur central disposant d'une librairie de programmes de conversion de protocoles ; tous ces processeurs étant munis d'un lien permettant d'une part le transfert des programmes de conversion protocoles et informations nécessaires au bon fonctionnement de l'interface et d'autre part le transfert bidirectionnel des informations entre la ou les machines et le ou les ordinateurs reliés à l'interface.

Les processeurs canaux sont aussi capables de se configurer au niveau matériel suite à la lecture des clefs propres à chaque câble de liaison entre la dite interface et les appareils et les ordinateurs à relier ; cette configuration se réalisant par l'adaptation de la couche physique au moyen de commutation électrique ou électronique de matériel spécifique à la liaison, le processeur central disposant d'une librairie supplémentaire de configuration des liaisons physiques.

L'invention sera mieux commue à l'aide de la description qui suit avec référence aux dessins annexés relatifs à deux modes de réalisations non limitatifs à l'exécution de l'invention.

La figure 1 est une représentation du dispositif de liaison informatique entre les appareils et les ordinateurs.

La figure 2 représente une connexion possible d'une clef à un câble, par exemple dans une prise.

La figure 3 représente une variante du dispositif de liaison informatique avec une carte mère d'un ordinateur munie par exemple de cartes d'extension et pouvant remplir les fonctionnalités de l'interface.

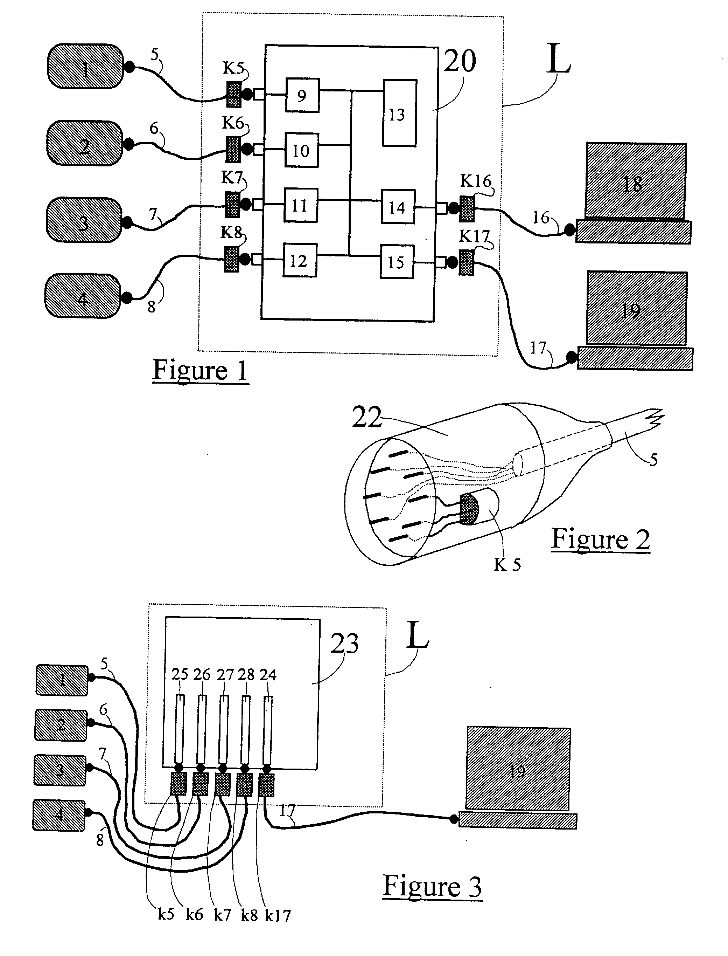

Dans la forme d'exécution illustrée en figure 1, les appareils 1, 2, 3 et 4 sont reliés à l'interface par des câbles 5, 6, 7 et 8 comportant chacun une clef d'identification k5, k6, k7 et k8. Quatre appareils ont été choisis pour cet exemple mais leur nombre n'est pas limité. L'interface 20 effectue la reconnaissance des clefs k5, k6, k7 et k8, et en fonction de cette reconnaissance, utilise les protocoles de communication et le matériel spécifiques afin de rendre possible le transfert d'informations entre les appareils 1, 2, 3 et 4 et l'interface 20.

D'autre part, l'interface 20 est reliée à un ou plusieurs ordinateurs 18 et 19 par les câbles 16 et 17. Deux ordinateurs ont été choisis pour cet exemple mais leur nombre n'est pas limité à deux. L'interface 20 effectue la reconnaissance des clefs k16 et k17, et en fonction de cette reconnaissance, utilise les protocoles de communication et le matériel spécifiques afin de rendre possible le transfert d'informations entre les ordinateurs 18 et 19 et l'interface 20.

Il est clair qu'après le chargement d'un programme de conversion protocole de communication approprié au protocole de l'appareil ou au protocole de l'ordinateur relié, ainsi qu'après l'adaptation de la couche physique, l'interface peut communiquer avec d'une part le ou les appareils et d'autre part le ou les ordinateurs.

L'interface 20 se compose de processeurs canaux d'appareil 9, 10, 11 et 12 (4 sont représentés à titre d'exemple mais le nombre n'est pas limité), de processeurs canaux d'ordinateurs 14 et 15 (2 sont représentés à titre d'exemple mais le nombre n'est pas limité) et d'un processeur central 13. Les modules auxiliaires non spécifiques à l'invention mais nécessaires au bon fonctionnement de l'interface tels que, entre autres, l'alimentation, ne sont pas représentés.

Le processeur central 13 comporte une bibliothèque de programmes de conversion de protocoles associés aux clefs lues sur les câbles de liaison. Il possède aussi une bibliothèque de codes permettant la sélection de circuits spécifiques à la couche physique de la liaison. Ce processeur central 13, à la demande des processeurs canaux 9, 10, 11, 12, 14 et 15, a les moyens de leur transmettre les différents programmes de conversion de protocoles et les différents codes de sélection de matériel afin que ces processeurs canaux puissent ensuite exécuter ces programmes et adapter leur matériel pour communiquer avec les appareils ou ordinateurs auxquels ils sont reliés. Le processeur central 13 a les moyens de rentrer en communication avec tous les processeurs canaux qui lui sont reliés et il a les moyens d'effectuer et d'orchestrer les transferts de données entre ces différents processeurs canaux.

Par processeur canal d'appareil 9, 10, 11 et 12 et processeur canal d'ordinateur 14 et 15, on entend un sous-ensemble électronique capable de :
1) lire la clef de reconnaissance du câble de liaison lorsqu'on branche celui-ci à l'interface,
2) effectuer une demande de chargement de programme de conversion de protocole au canal central 13 sur base de l'information lue dans la clef,
3) télé-charger le programme de conversion de protocole du canal central 13 et l'exécuter, télé-charger des informations jugées utiles à son bon fonctionnement,
4) adapter le matériel spécifique pour effectuer la liaison (par exemple, choix de la norme RS232 ou RS422 qui comporte un nombre de conducteurs différents, des niveaux de tensions différentes et d'une matière générale, des circuits d'interface différents) par commutation électrique ou électronique de matériel spécifique (circuits électroniques ou électriques spécifiques aux normes de communication) sur base d'informations chargées au point 3,
5) réaliser la liaison informatique de données et communiquer avec les appareils ou ordinateurs par l'exécution du programme chargé au point 3,
6) communiquer avec le processeur central 13 et avec les autres processeurs canaux.

A titre d'exemple, un tel processeur canal peut se réaliser au moyen d'un micro contrôleur de type 82C320 de la société DALLAS accompagné d'un circuit de mémoire vive statique, d'un circuit de mémoire morte de type EPROM et de circuits périphériques. Un logiciel approprié permettra d'une part d'assurer toutes les fonctions décrites ci dessus, entre autres la lecture de la clef sur un des ports d'entrée sortie du processeur, la communication entre canaux sur un port de communication série et la communication avec les appareils ou ordinateurs à relier sur le second port de communication série du dit processeur. Le processeur central 13 peut, par exemple, se réaliser sur base de la même technologie avec une mémoire étendue pour la mémorisation des bibliothèques et une sauvegarde de leur contenu par batterie. Ceci constitue un exemple parmi d'autres de réalisation d'un canal de l'interface. Les possibilités de réalisation d'un tel canal sont pratiquement illimitées en raison de la multitude de composants électroniques actuellement disponibles sur le marché.

La différence entre les processeurs canaux d'appareil 9, 10, 11 et 12 et les processeurs canaux d'ordinateurs 14 et 15 est que seuls les processeurs canaux d'ordinateurs 14 et 15 permettent aux ordinateurs 18 et 19 de changer la configuration et éventuellement charger d'autres programmes et d'autres données sur le canal central 13 et de ce fait là, peuvent charger de nouveaux programmes de conversion de protocoles, de nouvelles clefs et modifier le fonctionnement du système complet.

La figure 2 illustre le branchement d'un composant électronique k5 (par exemple une mémoire morte DS2224 de la société DALLAS) faisant office de clef électronique, sur les broches de la fiche 22, ce qui permet aux différents processeurs canaux de lire, grâce à un programme adapté, le contenu de cette mémoire morte.
L'utilisation du composant k5 est une illustration du procédé d'association d'une clef informatique à un câble de liaison. D'autres composants de type EEPROM, EPROM ou d'une manière générale, une mémoire non volatile ou tout autre composant ou ensemble de composants électriques ou électroniques capables de se faire reconnaître peuvent convenir pour la reconnaissance du câble.
La connexion de ce ou ces composants peut se réaliser en tout endroit du câble, éventuellement sous forme de boîtier et pas nécessairement aux extrémités de celui-ci ou dans ses prises de connexion.

Les autres fils du câble 5 connectés à la prise servent de support électrique pour l'information (exemple non limitatif: liaison RS232, RS422, Ethernet, etc.) et éventuellement de fils d'alimentation pour dispositif auxiliaire branché sur le câble (ex : convertisseur analogique/numérique) ou tout autre fil jugé nécessaire au bon fonctionnement de l'interface et des appareils qui lui sont reliés.

A titre d'exemple, la figure 2 montre que le composant k5 a été introduit dans la prise de connexion et comporte trois pattes connectées à trois des huit broches de la prise, les cinq broches restantes étant disponibles pour assurer la liaison informatique avec l'appareil à relier.

La figure 3 représente la carte mère 23 d'un ordinateur munie de cartes d'extension 25, 26, 27, 28 et 24 remplissant chacune le rôle d'un processeur canal d'appareil ou d'un processeur canal d'ordinateur. L'ordinateur comportant la carte mère 23 remplit à la fois le rôle de l'ordinateur 18 de la figure 1, les fonctions de processeur canal ordinateur 14 de la figure 1 et les fonctions de processeur central 13 de la figure 1. Les cartes d'extension 25, 26, 27 et 28 remplissent les fonctions des processeurs canaux appareil 9, 10, 11 et 12 de la figure 1. La carte d'extension 24 remplit la fonction du processeur canal ordinateur 15 de la figure 1. En effectuant les substitutions précitées, on obtient un fonctionnement identique à celui décrit à la figure 1.

La capacité globale de transfert d'informations entre canaux, c'est à dire la vitesse de transfert des informations est inversement proportionnelle au nombre de processeurs de canaux reliés entre eux et en activité dans l'interface mais est proportionnelle à la puissance des circuits processeurs canaux d'une part et au débit brut d'informations sur le lien reliant les canaux d'autre part.
En d'autres termes, il faudra veiller à adapter la puissance de chaque processeur canal ainsi que la vitesse du lien interne à l'interface en fonction de la puissance des appareils et ordinateurs à relier et au débit d'informations à échanger.

Les différents dispositits décrits ci-dessus sont entre autres d'une très garde utilité et très intéressants dans le domaine des interconnections des moniteurs médicaux ou appareils de mesure à usage scientifique ou industriel de marque ou de type différents à des ordinateurs chargés de la collecte et l'analyse des informations recueillies.
La seule tâche de l'utilisateur consiste à connecter à l'interface le câble spécifique de l'appareil ou de l'ordinateur qu'il veut relier. La configuration et l'adaptation du matériel sont ensuite entièrement automatiques.
D'autre part, le fait que le flux d'information est bidirectionnel permet à ces mêmes ordinateurs d'envoyer des informations vers des actionneurs de types hétérogènes (avec des protocoles de communications et des liens physiques propres à chaque appareil) afin d'agir sur un processus.
En raison de l'uniformisation par conversion spécifique des protocoles des appareils connectés à l'interface, les ordinateurs branchés sur celle-ci ont la possibilité de dialoguer avec ces appareils au moyen d'un même et unique protocole de communication sur un seul lien physique.
La charge de travail de ces ordinateurs s'en trouve fortement réduite et, c'est peut être le plus important, le programme d'application tournant sur ces ordinateurs ne se préoccupe plus des types et marques d'appareils sur lesquels il est connecté. En d'autres termes, tout changement d'appareil relié sur l'interface ne nécessite ni modification, ni adaptation, ni même configuration du programme d'application.
L'interchangeabilité des appareils s'en trouve garantie du fait de l'adaptation automatique de l'interface au nouvel appareil ou ordinateur connecté.

## Revendications

1. Dispositif de liaison informatique (L) comprenant une interface entre d'une part un ou des appareils (1, 2, 3 et 4) avec protocoles de communication hétérogènes et d'autre part un ou des ordinateurs (18 et 19) avec des protocoles de communication hétérogènes, l'interface (20) possédant une série de canaux avec processeurs canaux (9, 10, 11, 12, 14 et 15), et étant munie de prises permettant de connecter des câbles de liaison entre ladite interface et les appareils et/ou les ordinateurs à relier, les processeurs canaux étant reliés, au sein de l'interface, à un processeur central (13), caractérisé en ce que:
- chacun des câbles (5, 6, 7, 8, 16 et 17) reliant les appareils (1, 2, 3, 4) et/ou ordinateurs (18 et 19) à l'interface (20) comporte une clef d'identification (k5, k6, k7, k8, k16 et k17) ;
- le processeur central (13) dispose d'une librairie de programmes de conversion de protocoles ;
- les processeurs canaux (9, 10, 11, 12, 14 et 15) sont capables de se configurer au niveau logiciel suite à la lecture des clefs d'identification (k5, k6, k7, k8, k16 et k17) propres à chaque câble de liaison (5, 6, 7, 8, 16 et 17) entre ladite interface et les appareils et/ou les ordinateurs à relier, par chargement d'un programme de conversion de protocole du processeur central (13),
tous ces processeurs étant munis d'un lien permettant d'une part le transfert des programmes de conversion protocoles et des informations nécessaires au bon fonctionnement de l'interface et d'autre part le transfert bidirectionnel des informations entre la ou les machines et le ou les ordinateurs reliés à l'interface.

2. Dispositif suivant la revendication 1 caractérisé en ce que l'interface (20) possède une série de canaux (9, 10, 11, 12, 14 ou 15) capables de se configurer aussi bien au niveau logiciel qu'au niveau matériel suite à la lecture de clefs d'identification (k5, k6, k7, k8, k16 ou k17) propres à chaque câble de liaison entre la dite interface et les appareils (1, 2, 3, ou 4) et/ou les ordinateurs (18 ou 19) à relier, l'adaptation de la couche physique se réalisant au moyen de commutation électrique ou électronique de matériel spécifique à la dite couche physique de la liaison, le processeur central (13) disposant d'une librairie supplémentaire de configuration des liaisons physiques.

3. Dispositif suivant la revendication 1 et 2 caractérisé en ce que chaque câble de liaison (5, 6, 7, 8, 16 et 17) reliant d'une part l'interface (20) et d'autre part un appareil (1, 2, 3 ou 4) ou un ordinateur (18 ou 19) contient une clef d'idendification (k5, k6, k7, k8, k16 ou k17) permettant d'identifier le câble auquel elle est reliée, l'interface ayant les moyens de lire l'information contenue dans cette clef d'identification et de configurer au niveau logiciel et matériel le canal (9, 10, 11, 12, 14 ou 15) auquel le câble est connecté.

4. Dispositif suivant l'une des revendications 1 à 3 caractérisé en ce que chaque canal (9, 10, 11, 12, 14 ou 15) est constitué d'un microprocesseur avec ses circuits périphériques tels qu'entre autres, de la mémoire vive (RAM), de la mémoire morte (EPROM), deux lignes de communication permettant de communiquer avec les appareils ou ordinateurs reliés à l'interface d'une part et les autres processeurs canaux et le processeur central (13) de l'interface d'autre part, un dispositif lui permettant de lire la clef d'identification (k5, k6, k7, k8, k16 ou k17) contenue dans le câble de liaison (5, 6, 7, 8, 16 ou 17).

## Patentansprüche

1. Daten-Verbindungsvorrichtung (L) mit einem Interface zwischen einem oder mehreren Geräten (1, 2, 3 und 4) mit heterogenen Übertragungsprotokollen auf der einen Seite und einem oder mehreren Rechnern (18 und 19) mit heterogenen Übertragungsprotokollen auf der anderen Seite, wobei das Interface (20) eine Reihe von Kanälen mit Kanalprozessoren (9, 10, 11, 12, 14 und 15) aufweist und mit Anschlüssen versehen ist, die eine Verbindung von Verbindungskabeln zwischen dem Interface und den zu verbindenden Geräten und/oder den Rechnern ermöglichen, wobei die Kanalprozessoren in dem Interface mit einem Zentralprozessor (13) verbunden sind, dadurch gekennzeichnet, daß
- jedes der Kabel (5, 6, 7, 8, 16 und 17), die die Geräte (1, 2, 3, 4) und/oder die Rechner (18 und 19) mit dem Interface (20) verbinden, einen Identifizierungsschlüssel (k5, k6, k7, k8, k16 und k17) aufweist;
- der Zentralprozessor (13) eine Protokollumwandlungsprogrammbibliothek aufweist;
- die Kanalprozessoren (9, 10, 11, 12, 14 und 15) in der Lage sind, sich auf der Programmebene nach dem Lesen der Idenfifizierungsschlüssel (k5, k6, k7, k8, k16 und k17) jedes der Verbindungskabel (5, 6, 7, 8, 16 und 17) zwischen dem Interface und den zu verbindenden Geräten und/oder den Rechnern durch Laden eines Protokollumwandlungsprogramms des Zentralprozessors (13) zu konfigurieren,
wobei sämtliche Prozessoren mit einer Verbindung versehen sind, die einerseits das Übertragen von Protokollumwandlungsprogrammen und der zum problemlosen Funktionieren des Interface erforderlichen Informationen und andererseits das bidirektionale Übertragen von Informationen zwischen der oder den Maschinen und dem oder den Rechnern, die mit dem Interface verbunden sind, ermöglicht.

2. Vorrichtung nach Anspruch 1, dadurch gekennzeichnet, daß das Interface (20) eine Reihe von Kanälen (9, 10, 11, 12, 14 und 15) aufweist, die in der Lage sind, sich sowohl auf Programmebene, als auch aufHardwareebene nach dem Lesen der Identifizierungsschlüssel (k5, k6, k7, k8, k16 und k17) jedes der Verbindungskabel (5, 6, 7, 8, 16 und 17) zwischen dem Interface und den zu verbindenden Geräten und/oder den Rechnern zu konfigurieren, wobei die Anpassung des physikalischen Zustands durch elektrische oder elektronische Schaltmittel aus spezifischer Hardware in den physikalischen Zustand der Verbindung erfolgt, wobei der Zentralprozessor (13) eine zusätzliche Bibliothek der Konfiguration der physikalischen Verbindungen aufweist.

3. Vorrichtung nach Anspruch 1 und 2, dadurch gekennzeichnet, daß jedes der Verbindungskabel (5, 6, 7, 8, 16 und 17), die die Geräte (1, 2, 3, 4) und/oder die Rechner (18 und 19) mit dem Interface (20) verbinden, einen Identifizierungsschlüssel (k5, k6, k7, k8, k16 und k17) aufweist, der das Identifizieren des diesem zugeordneten Kabels ermöglicht, wobei das Interface Einrichtungen zum Lesen der in diesem Identifizierungsschlüssel enthaltenen Informationen und zum Konfigurieren des mit dem Kabel verbundenen Kanals (9, 10, 11, 12, 14 oder 15) auf Programm- und Hardwareebene aufweist.

4. Vorrichtung nach einem der Ansprüche 1 bis 3, dadurch gekennzeichnet, daß jeder Kanal (9, 10, 11, 12, 14 oder 15) von einem Mikroprozessor mit seinen Peripherieschaltungen gebildet ist, wie unter anderem einem Direktzugriffsspeicher (RAM), einem Festwertspeicher (EPROM), zwei Übertagungsleitungen, die eine Kommunikation mit den Geräten oder Rechnern, die mit dem Interface verbunden sind, auf der einen Seite und dem Zentralprozessor (13) des Interface auf der anderen Seite ermöglichen, wobei eine Vorrichtung diesem das Lesen des in dem Verbindungskabel (5, 6, 7, 8, 16 und 17) enthaltenen Identifizierungsschlüssels (k5, k6, k7, k8, k16 und k17) ermöglicht.

## Claims

1. Computer link device (L) comprising an interface between, on the one hand, one or more apparatuses (1, 2, 3 and 4) having heterogeneous communication protocols and, on the other hand, one or more computers (18 and 19) having heterogeneous communication protocols, the interface (20) having a series of channels with channel-processors (9, 10, 11, 12, 14 and 15) and being provided with plugs allowing link cables to be connected between the said interface and the apparatuses and/or the computers to be linked, the channel-processors being linked, within the interface, to a central processor (13), characterized in that:
- each of the cables (5, 6, 7, 8, 16 and 17) linking the apparatuses (1, 2, 3, 4) and/or the computers (18 and 19) to the interface (20) comprises an identification key (k5, k6, k7, k8, k16 and k17);
- the central processor (13) is provided with a library of protocol conversion programs;
- the channel-processors (9, 10, 11, 12, 14 and 15) are capable of being configured at the software level following the reading of the identification keys (k5, k6, k7, k8, k16 and k17) associated with each link cable (5, 6, 7, 8, 16 and 17) between the said interface and the apparatuses and/or the computers to be linked, by loading a protocol conversion program from the central processor (13),
all those processors being provided with a linkage allowing, on the one hand, the transfer of the protocol conversion programs and of information required for proper operation of the interface and, on the other hand, the bidirectional transfer of information between the machine or machines and the computer or computers linked to the interface.

2. Device according to claim 1, characterized in that the interface (20) has a series of channels (9, 10, 11, 12, 14 or 15) capable of being configured both at the software level and at the hardware level following the reading of identification keys (k5, k6, k7, k8, k16 or k17) associated with each link cable between the said interface and the apparatuses (1, 2, 3 or 4) and/or the computers (18 or 19) to be linked, adaptation of the physical part being carried out by means of electrical or electronic switching of hardware specific to the said physical part of the link, the central processor (13) being provided with an additional library for configuration of the physical links.

3. Device according to claims 1 and 2, characterized in that each link cable (5, 6, 7, 8, 16 and 17) linking, on the one hand, the interface (20) and, on the other hand, an apparatus (1, 2, 3 or 4) or a computer (18 or 19) contains an identification key (k5, k6, k7, k8, k16 or k17) making it possible to identify the cable to which it is linked, the interface having means for reading the information contained in that identification key and for configuring, at the software and hardware level, the channel (9, 10, 11, 12, 14 or 15) to which the cable is connected.

4. Device according to one of claims 1 to 3, characterized in that each channel (9, 10, 11, 12, 14 or 15) consists of a microprocessor together with its peripheral circuits such as, *inter alia,* read-write memory (RAM), read-only memory (EPROM), two communication lines making it possible to communicate with, on the one hand, the apparatuses or computers linked to the interface and, on the other hand, the other channel-processors and the central processor (13) of the interface, a device allowing it to read the identification key (k5, k6, k7, k8, k16 or k17) contained in the link cable (5, 6, 7, 8, 16 or 17).
